# EUROPEAN PATENT APPLICATION

(11) **EP 3 654 413 A1**
(43) Date of publication of application: **20.05.2020**
(21) Application number: 18206277.8
(22) Date of filing: 14.11.2018
(51) Int. Cl.: H01M 4/04, H01M 4/134, H01M 4/1395, H01M 4/62, H01M 10/0525, H01M 4/02

(54) **SILICON-CARBON COMPOSITE ANODE MATERIAL**

(71) Applicant: Université de Liège, 4000 Liège (BE)
(72) Inventor: ESHRAGHI, Nicolas, 4102 Seraing (BE); MAHMOUD, Abdelfattah, 4020 Liège (BE); BOSCHINI, Frédéric, 4000 Rocourt (BE); CLOOTS, Rudi, 1357 Hélécine (BE)
(74) Representative: DenK iP

(57) **Abstract**

In a first aspect, the present invention relates to a composite anode material, comprising: (i) a layer of silicon-carbon (Si/C) composite material, and (ii) a graphene oxide (GO) layer covering the layer of silicon-carbon composite material.

## Description

### Technical field of the invention

The present invention relates to a composite anode material comprising a silicon-carbon composite, particularly for use in a lithium-ion battery.

### Background of the invention

Silicon is considered as a promising anode candidate for lithium-ion batteries, mainly thanks to its very large theoretical capacity (e.g. 3580 mAh.g⁻¹ for the structure Li_{3.75}Si). For typical electrode materials, the reactions occurring during the lithiation/delithiation processes are often akin to lithium insertion/extraction phenomena in the structure of the active material. In contrast, for Si-based materials, the lithiation process rather pertains to a conversion phenomenon related to the formation of a LiₓSi alloy. This conversion results is related to the reorganization of the crystalline structure to form an amorphous phase, which in turn leads to a high volume expansion that can go beyond 300% relative to the initial volume.

In order to overcome this volume expansion problem, one strategy is to encapsulate the silicon particles with a conductive material. In addition to acting as a buffer for the volume expansion, such a conductive material can improve the electronic conductivity of the electrode material. Several research efforts have addressed this issue, typically by designing well-defined Si nanostructures, such as nanowires, nanotubes, nanoparticles, porous structures, etc., as well as their carbon material composites. The design of these silicon/carbon composites attracts considerable interest because of the good electronic conductivity and stress-buffer nature of the carbon conductive material, thereby improving the stability and electrochemical performance of the silicon-based anodes for Li-ion batteries.

In order to prepare silicon/carbon composites, an interesting method suitable for industrial use is the spray drying method. For example, in WO2016106487 (A1), a dispersion containing silicon nanoparticles, one or more conductive carbon additives and a carbon precursor in absolute ethyl alcohol is dried by spray-drying. In this way, the silicon nanoparticles and one or more conductive carbon additives are mixed in the form of porous secondary particles and coated (1-10 nm) with the carbon precursors. However, while the Si/CNT particles are encapsulated in a carbon layer, their relatively compact structure does not inhibit volume expansion, which leads to fading of the capacity over time. This is not favorable for marketable battery applications, where a performance of over 1000 cycles is desired.

Another silicon-carbon composite preparation strategy is presented in WO2015170918 (A1). Here the process starts with a first mixed solution in which silicon or silicon oxide particles, a conductive material and a porogen are dispersed. Then by dispersing graphene oxide (GO) in the first mixed solution, a second mixed solution is obtained with the intention of creating a core-shell particle with GO as the shell layer. However, the reported maximum capacity of the electrode amounted only to about 900 mAh/g, while the capacity retention was only stable for the first 10 cycles.

There is thus still a need in the art for better Si-based anode materials.

### Summary of the invention

It is an object of the present invention to provide good composite anode materials. It is a further object of the present invention to provide good methods of fabrication, devices and uses associated with said composite anode materials. This objective is accomplished by a composite anode material, a method, electrode formulation, a battery and a use according to the present invention.

It is an advantage of embodiments of the present invention that the composite anode material enables high capacity values (e.g. 2200-2300 mAh/g for Li-Si cells cycled at C/5 without capacity limitation or 1200 mAh/g at 1C when the capacity is limited to 1200 mAh/g).

It is an advantage of embodiments of the present invention that the composite anode material allows an excellent capacity retention over extended cycling times (e.g. up to almost 100% over 1500 cycles for a capacity limitation of 1200 mAh/g cycled at 1C).

It is an advantage of embodiments of the present invention that the composite anode material has a high reliability.

It is an advantage of embodiments of the present invention that the composite anode material has a long life cycle.

It is an advantage of embodiments of the present invention that the composite anode material is resistant against Li-induced volume expansion.

It is an advantage of embodiments of the present invention that the composite anode material allows the formation of a stable solid electrolyte interphase (SEI) layer.

It is an advantage of embodiments of the present invention that the composite anode material may have a high Si loading (e.g. about 30 wt%). This insures that a lower Si loading (e.g. 5-10 wt%), more typical of current batteries under development in the art, is also possible.

It is an advantage of embodiments of the present invention that the Li diffusion path is minimally hindered.

It is an advantage of embodiments of the present invention that the composite anode material can make use of recycled materials (e.g. Si recycled from photovoltaic cells or from wafer fragments).

It is an advantage of embodiments of the present invention that the Si/C composite particles used in the composite anode material are excellently homogenous.

It is an advantage of embodiments of the present invention that the composite anode material can be fabricated in a relatively straightforward and economical fashion. It is an advantage of embodiments of the present invention that the composite anode material can be fabricated on an industrial scale.

In a first aspect, the present invention relates to a composite anode material, comprising: (i) a layer of silicon-carbon (Si/C) composite material, and (ii) a graphene oxide (GO) layer covering the layer of silicon-carbon composite material.

In a second aspect, the present invention relates to a method for forming a composite anode material as defined in any embodiment of the first aspect, comprising: (a) providing a layer of silicon-carbon composite material, and (b) providing a graphene oxide layer over the layer of silicon-carbon composite material.

In a third aspect, the present invention relates to a battery, comprising a composite anode material as defined in any embodiment of the first aspect.

In a fourth aspect, the present invention relates to a use of a graphene oxide layer for inhibiting or buffering a volume expansion of a layer of silicon-carbon composite material as defined in any embodiment of the first aspect.

In embodiments, the present invention relates to a use of a graphene oxide layer for inhibiting or buffering a volume expansion of the layer of silicon-carbon composite material during cycling.

In embodiments, the volume expansion may be due to the presence of Li-ions. In embodiments, the volume expansion may be due to the reversible formation of a LixSi alloy in the presence of Li-ions.

In preferred embodiments, inhibiting the volume expansion may comprise encapsulating of Silicon material inside by carbon nanotubes and the layer of silicon-carbon composite material (between the conductive substrate and the graphene oxide layer) and thereby physically hindering the volume expansion. In alternative or complementary embodiments, inhibiting the volume expansion may comprise providing a space (e.g. a hollow, cavity or pore), internal to the composite anode material, in which volume expansion may occur without changing the overall shape of the composite anode material.

In embodiments, the use of the graphene oxide layer may further be for forming a stable solid-electrolyte interlayer.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 shows the average size distribution of Si primary particles as (a) measured by a particle size analyzer and (b) observed by scanning electron microscopy (SEM) (Fig. 1b), in accordance with an exemplary embodiment of the present invention.
Fig. 2 shows SEM images of silicon-carbon (Si/C) composite particles (a) before and (b) after heat treatment, in accordance with an exemplary embodiment of the present invention.
Fig. 3 shows transmission electron microscopy (TEM) images of Si/C composite particles, in accordance with an exemplary embodiment of the present invention.
Figs. 4, 5, 7 and 8 show the obtained specific capacity in function of the number cycles for composite anode materials, in accordance with exemplary embodiments of the present invention.
Fig. 6 shows SEM images of (Si/C) composite anode materials (a) without and (b) with graphene oxide (GO) layer, in accordance with an exemplary embodiment of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, over, under and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a composite anode material, comprising: (i) a layer of silicon-carbon (Si/C) composite material, and (ii) a graphene oxide (GO) layer covering the layer of silicon-carbon composite material.

In embodiments, the composite anode material may be for use in the presence of Li-ions. In embodiments, the composite anode material may be for use as an electrode. For example, the composite anode material may be for use as a negative electrode in a Li-ion battery. The electrode can advantageously be a double-layered electrode, i.e. comprising the layer of Si/C composite material (as active material) and the GO layer (as buffer layer).

The thickness of the layer of silicon-carbon composite material is not crucial but it may for instance be from 10 to 1000 µm, preferably from 30 to 300 µm, more preferably from 50 to 300 µm. For instance, the thickness may be from 30 to 100 µm. Theses thicknesses are preferably measured on a dry film after compression thereof.

In embodiments, the layer of silicon-carbon composite material may comprise: (ia) a matrix of a conductive carbon material and a binder, and (ib) silicon-carbon composite particles dispersed in said matrix.

In embodiments, the conductive carbon material may be carbon black. In embodiments, the binder may be carboxymethylcellulose (CMC). The matrix advantageously provides an improved physical and electric contact between the Si/C composite particles and an improved electrolyte percolation between said particles.

In embodiments, the silicon-carbon composite particles may each comprise a plurality of silicon (Si) particles intermixed with a carbon-based material. In embodiments, the Si particles may have an average size below 200 nm. The Si particles are herein also referred to as 'primary particles', whereas the Si/C composite particles are herein also referred to as 'secondary particles'.

In embodiments, the silicon-carbon composite particles may form a powder having a density of from 0.001 to 2.3 g/cm³. For instance, it may have a density of from 0.01 to 0.25 g/cm³.

In embodiments, the carbon-based material may be a conductive carbon material. In embodiments, the conductive carbon material may be selected from carbon black, carbon nanotubes (CNT), graphene and graphene oxide. CNTs are advantageous as they form a rigid network which permit to interconnect the Si particles. In embodiments, the carbon-based material (e.g. the conductive carbon material) may be a material derived from an organic compound or it may comprise such a material. In embodiments, the carbon-based material may be or may comprise a heat-carbonized organic compound. The nature of the organic compound that is carbonized is of low importance. Virtually any organic compound is suitable. The organic compound is typically a non-conductive organic compound. In embodiments, the organic compound may be a water-soluble organic compound. Examples of suitable organic compounds are water-soluble polymers, water-soluble organic acids and water-soluble sugars. In embodiments, the organic compound may be selected from polyvinylpyrrolidone (PVP), polyvinyl alcohol (PVA), citric acid, ascorbic acid, oxalic acid and lactose. In embodiments, the organic compound may be soluble in an organic solvent such as isopropanol, ethanol or cyclohexane. The presence of a carbon-based material (e.g. CNT) in the Si/C composite particles can advantageously inhibit the volume expansion of the layer of silicon-carbon composite material (e.g. of the Si/C composite particles). The presence of a conductive carbon-based material (e.g. CNT) in the Si/C composite particles can advantageously improve the electrochemical performance of the layer of silicon-carbon composite material (e.g. of the Si electrode material).

In embodiments, the silicon-carbon composite particles may comprise a porous shell surrounding a hollow, the porous shell comprising the plurality of silicon particles intermixed with a carbon-based material. In embodiments, the silicon-carbon composite particles may be particles comprising a porous shell surrounding a hollow, parts of such particles (e.g. resulting from their breakage), or a mixture of both. In embodiments, the hollow may be a cavity. The morphology of a porous shell surrounding a hollow can advantageously inhibit the volume expansion of the layer of silicon-carbon composite material (e.g. of the Si/C composite particles) by allowing some space for the expansion to happen inwards. Furthermore, the porous shell can advantageously improve the electrochemical performance of the layer of silicon-carbon composite material by allowing Li to diffuse through the shell relatively unhindered.

In embodiments, the graphene oxide (GO) layer covering the layer of silicon-carbon composite material may be on the layer of silicon-carbon composite material, i.e. in direct physical contact therewith.

In embodiments, the graphene oxide layer may have a thickness comprised between one monoatomic layer and 2µm or one monoatomic layer and 1µm.

In embodiments, the layer of silicon-carbon (Si/C) composite material is on a conductive substrate and the graphene oxide (GO) layer is on the silicon-carbon composite material.

In embodiments, the conductive substrate may be flat.

In embodiments, the conductive substrate may be a metal substrate (e.g. a copper substrate such as a copper foil).

In embodiments, any feature of any embodiment of the first aspect may independently be as correspondingly described for any embodiment of any of the other aspects.

In a second aspect, the present invention relates to a method for forming a composite anode material as defined in any embodiment of the first aspect, comprising: (a) providing a layerof silicon-carbon composite material, and (b) providing a graphene oxide layer over the layer of silicon-carbon composite material.

In embodiments, providing the layer of silicon-carbon composite material in step a may comprise: (a1) providing a slurry of the silicon-carbon composite material on a conductive substrate, and (a2) drying the slurry to form the layer of silicon-carbon composite material.

In embodiments, providing the slurry of silicon-carbon composite material on the conductive substrate in step a1 may comprise mixing the silicon-carbon composite material with a conductive carbon material and a binder to form the slurry, and coating the slurry on the conductive substrate using a wet coating technique. In embodiments, mixing the Si/C composite material with the conductive-carbon material and the binder may be performed in a buffer solution. In embodiments, the buffer solution may have a pH between 1 and 6 or 2 and 4, e.g. 3. In embodiments, the weight ratio of Si:conductive carbon material may be from 1:20 to 20:1, preferably from 1:10 to 10:1, more preferably from 1:5 to 5:1, yet more preferably from 1:3 to 3:1, yet more preferably from 1:2 to 2:1, even more preferably from 1:1.5 to 1.5:1, yet even more preferably from 1:1.2 to 1.2:1, such as 1:1. In embodiments, the weight ratio of Si:binder may be from 1:3 to 20:1, preferably from 1:3 to 10:1, more preferably from 1:3 to 5:1, yet more preferably from 1:3 to 3:1, yet more preferably from 1:2 to 2:1, even more preferably from 1:1.5 to 1.5:1, yet even more preferably 1:1.2 to 1.2:1, such as 1:1. In embodiments, the weight ratio of conductive carbon material:binder may be from 10:1 to 1:10, preferably from 5:1 to 1:5, more preferably from 1:3 to 3:1, yet more preferably from 1:2 to 2:1, even more preferably from 1:1.5 to 1.5:1, yet even more preferably from 1:1.2 to 1.2:1, such as 1:1. In preferred embodiments, the ratio of Si:conductive carbon material:binder may be 1:1:1. In preferred embodiments, the conductive carbon material may be carbon black. In preferred embodiments, the binder is an organic polymer. Any binder typically used in batteries may be used. Examples of suitable binders are water-soluble polymers such as carboxymethylcellulose (CMC) or polyvinyl alcohol (PVA), elastomers such as styrene butadiene rubber (SBR), biopolymers such as lignin, self-healing polymers such as polyethylene glycol (PEG), branched polymers such as branched polyethyleneimine (PEI), N-methyl pyrrolidone-soluble polymers such as polyvinylidene fluoride (PVDF), amongst others. In preferred embodiments, the binder may be a polysaccharide such as carboxymethylcellulose (CMC). In embodiments, the wet coating technique may be selected from film coating, doctor blading, roll-to-roll processing and inkjet printing.

In embodiments, the conductive substrate may be a metallic substrate such as a copper foil.

In embodiments, drying the slurry in step a2 may be performed at a temperature between 0 and 120 °C. In embodiments, drying the slurry may comprise first drying the slurry at a temperature between 10 and 40 °C under atmospheric pressure for at least 1 hour, and subsequently drying the slurry at a temperature between 60 and 100 °C under vacuum for at least 1 hour. In embodiments, drying the slurry may comprise applying a vacuum. Drying the slurry may, for example, comprise drying the slurry overnight at room temperature and then at 80 °C under vacuum for 12 hours.

In embodiments, providing the graphene oxide layer over the layer of silicon-carbon composite material may be providing the graphene oxide layer on the layer of silicon-carbon composite material.

Preferably, the graphene oxide layer is provided on a dry layer of silicon-carbon composite material.

In embodiments, providing the graphene oxide layer in step b may comprise: (b1) providing (e.g. casting) an aqueous suspension of graphene oxide on the layer of silicon-carbon composite material, and (b2) drying the aqueous suspension to form the graphene oxide layer. In embodiments, the aqueous suspension of graphene oxide may comprise between 0.1 and 5 wt%, preferably 0.4 and 3 wt% graphene oxide. For instance, 0.4 wt% and 2.5 wt% aqueous suspensions are commercially available from Graphenea™. Suspensions of any concentration, and in particular suspensions having a concentration of more than 0.4%, can be prepared by Hummers method (or a modification thereof) starting with graphite powder.

In embodiments, the method may comprise a step a', before step a, of forming the silicon-carbon composite material, comprising: (a'1) providing a suspension of silicon particles, the silicon particles (i.e. primary particles) having an average size of 200 nm or lower, (a'2) mixing a carbon-based material into the suspension of silicon particles, (a'3) spray drying the suspension of silicon particles and carbon-based material to form particles of silicon-carbon composite material (i.e. secondary particles), and (a'4) baking the particles of silicon-carbon composite material in a reductive atmosphere. In embodiments, the carbon-based material may be a conductive carbon material and/or an organic compound.

In embodiments, the suspension of Si particles in step a'1 may be a suspension of Si in an alcohol (e.g. anhydrous isopropanol) or another solvent in which the carbon-based material may be mixed in step a'2 and that is preferably compatible with the spray drying in step a'3. In embodiments, a concentration of Si particles in the suspension may be between 4 and 40 wt%. The size of the Si particles can, for example, be determined using a particle size analyzer or by a suitable microscopy technique (e.g. scanning electron microscopy).

In embodiments, step a'1 and/or step a'2 may comprise a ball milling. Ball milling can advantageously be used for reducing the size of the silicon particles and/or for mixing.

In embodiments, the silicon particles may be obtained through grinding silicon from photovoltaic cells and/or wafer fragments. Grinding is particularly preferred when the silicon particles or fragments have an average size above about 200 µm. In embodiments, the silicon particles may first be ground to an initial size (e.g. below 125 µm) and subsequently ball milled to a lower size (e.g. below 200 nm). In embodiments, particularly when the silicon particles are obtained from photovoltaic cells, a step of leaching metals from the silicon may precede the grinding. In other embodiments, the silicon particles may be a silicon nanopowder. Silicon nanopowders are commercially available and typically do not need to be ground and/or ball milled to smaller sizes.

In embodiments, mixing a carbon-based material into the suspension in step a'2 may comprise mixing a mixture (e.g. a solution or a suspension) of the conductive carbon material and/or a mixture (e.g. a solution or a suspension) of the organic compound into the suspension. In embodiments, a concentration of the conductive carbon material in the mixture of the conductive carbon material may be between 0.01 and 50 wt%, preferably between 0.01 wt% and 10 wt%. In embodiments, a concentration of the organic compound in the mixture of the organic compound may be between 1wt% and 50 wt%, preferably between 1 wt% and 40 wt%. In embodiments, an amount of carbon-based material mixed in step a'2 may be such that a final carbon content in the particles of silicon-carbon composite material (i.e. after step a'4) is between 1 and 50wt%, preferably between 5 and 20 wt%. The final carbon content may be measured with an elemental analyser. After step a'2, a homogenous mixture of the Si particles and the carbon-based material in a solvent may be obtained.

In embodiments, baking the particles of silicon-carbon composite material in step a'4 may comprise baking the particles at a temperature of from 900 to 1300 °C, preferably 1100 °C, for a period of from 6 to 24 hours, preferably 12 hours. In embodiments, the reductive atmosphere may comprise an Ar/H₂ mixture (e.g. 95 vol% Ar/5 vol% H₂). Baking the particles of silicon-carbon composite material in a reductive atmosphere advantageously allows reducing any SiO₂ that would have formed on the particles and allows to transform the organic compound in a conductive carbon material.

In embodiments, the assembly of the layer of silicon-carbon (Si/C) composite material on a conductive substrate and of the graphene oxide (GO) layer on the silicon-carbon composite material, may be compressed to adjust the thickness of the electrode. For this purpose, a calendering process may be used. This compressing step is advantageous because it improves the contact of the various electrode components. It enhances the interfacial contact, resulting in an increase in electronic conductivity due to a better contact between the carbon-based material and the silicon. It also increases the density of the silicon carbon composite on the conductive substrate, which enables achieving higher energy density values for the electrode.

In embodiments, any feature of any embodiment of the second aspect may independently be as correspondingly described for any embodiment of any of the other aspects.

In a third aspect, the present invention relates to a battery, comprising a composite anode material as defined in any embodiment of the first aspect.

Typically, the composite anode material is on a conductive substrate as defined in any other aspect of the present invention.

Typically, the battery further comprises a cathode.

Typically, the battery further comprises an electrolyte between the anode and the cathode. Typically, the electrolyte may be comprised in a separator separating the anode and the cathode. The separator is a permeable membrane placed between the battery's anode and cathode. The separator is typically impregnated with an electrolyte. Suitable materials for the separator include nonwoven fibers (cotton, nylon, polyesters, glass), polymer films (polyethylene, polypropylene, poly (tetrafluoroethylene), polyvinyl chloride), ceramic materials, and naturally occurring substances (rubber, asbestos, wood).

Nonwoven fibers are typically in the form of a manufactured sheet, web or mat of directionally or randomly oriented fibers.

Separators can use a single or multiple layers/sheets of material.

In embodiments, a solid electrolyte can be used between the anode and the cathode. In such embodiments, a separator is not used.

In embodiments, the battery may be a lithium-ion battery.

In embodiments, when the battery is a lithium-ion battery, it may further comprise a cathode material comprising lithium. Examples of suitable cathode materials are Lithium Nickel Cobalt Manganese Oxide (LiNiCoMnO₂; NMC), Lithium Iron Phosphate (LiFePO₄; LFP); Lithium Nickel Cobalt Aluminium Oxide (LiNiCoAlO₂; NCA); Lithium Manganese Oxide (LiMn₂O₄; LMO); Lithium Nickel Manganese Spinel (LiNi_{0.5}Mn_{1.5}O₄; LNMO); and Lithium Cobalt Oxide (LiCoO₂; LCO).

In the case of a lithium-ion battery, a typical electrolyte is LiPF₆. LiPF₆ may for instance be present in solution in a carbonate. For instance, LiPF₆ may be in solution in ethylene carbonate, dimethyl carbonate, fluoroethylene carbonate, vinylene carbonate or a mixture thereof. Preferably, the LiPF6 solution comprises ethylene carbonate, dimethyl carbonate, fluoroethylene carbonate, and vinylene carbonate.

In embodiments, the anode loading, i.e. the mass of silicon per cm² of conductive substrate, may be from 1 to 40 mg/cm². The anode loading can easily be varied in this range according to the desired energy density.

In embodiments, any feature of any embodiment of the third aspect may independently be as correspondingly described for any embodiment of any of the other aspects.

In a fourth aspect, the present invention relates to a use of a graphene oxide layer for inhibiting or buffering a volume expansion of a layer of silicon-carbon composite material as defined in any embodiment of the first aspect.

In embodiments, the present invention relates to a use of a graphene oxide layer for inhibiting or buffering a volume expansion of the layer of silicon-carbon composite material during cycling.

In embodiments, the volume expansion may be due to the presence of Li-ions. In embodiments, the volume expansion may be due to the reversible formation of a LiₓSi alloy in the presence of Li-ions.

In preferred embodiments, inhibiting the volume expansion may comprise encapsulating of Silicon material inside by carbon nanotubes and the layer of silicon-carbon composite material (between the conductive substrate and the graphene oxide layer) and thereby physically hindering the volume expansion. In alternative or complementary embodiments, inhibiting the volume expansion may comprise providing a space (e.g. a hollow, cavity or pore), internal to the composite anode material, in which volume expansion may occur without changing the overall shape of the composite anode material.

In embodiments, the use of the graphene oxide layer may further be for forming a stable solid-electrolyte interlayer (SEI). A stable SEI may, for example, be formed because of the improved conductivity of the composite anode material by the provision of the graphene oxide layer, e.g. due to a further improvement in the physical and electric contact between the electrochemically active secondary particles.

In embodiments, any feature of any embodiment of the fourth aspect may independently be as correspondingly described for any embodiment of any of the other aspects.

The invention will now be described by a detailed description of several embodiments of the invention. It is clear that other embodiments of the invention can be configured according to the knowledge of the person skilled in the art without departing from the true technical teaching of the invention, the invention being limited only by the terms of the appended claims.

### Example 1: Composite anode material and battery based thereon

### Example 1a: Retrieval of Si from photovoltaic cells

The silicon used in this preparation was obtained from the recovery of out-of-use photovoltaic cells of the first-generation photovoltaic (PV) panels (i.e. comprising mono- or polycrystalline silicon); nevertheless, it will be clear that Si could equally be obtained from other sources.

Metals contained in the photovoltaic cells were first leached out by using an etching medium. Chemical baths of 8 mol/L KOH and 8 mol/L HNO₃ were therefor prepared. A volume of 2 liters of etching medium was used to leach 200 g of photovoltaic panel fragments. After each leaching step, the fragments were thoroughly washed with deionized water and the baths were recovered and reused to leach another fraction of 200 g of fragments (e.g. up to a maximum efficiency of 500 g/L for KOH or 1 kg/L for HNO₃). The recovered Si was then pre-grinded to obtain Si powder with a particle size under 125 µm.

### Example 1b: Formation of Si/C composite particles

Si powder (< 125 µm) was ball-milled for 1 hour in a planetary ball-milling machine using 1.5 mm Zirconia beads. Anhydrous isopropanol was added as a solvent, to ensure minimal oxidation of Si in the process. The concentration of Si in the resulting suspension was 40 wt%. The suspension was subsequently further ball-milled for 3 hours, this time using 0.5 mm Zirconia beads.

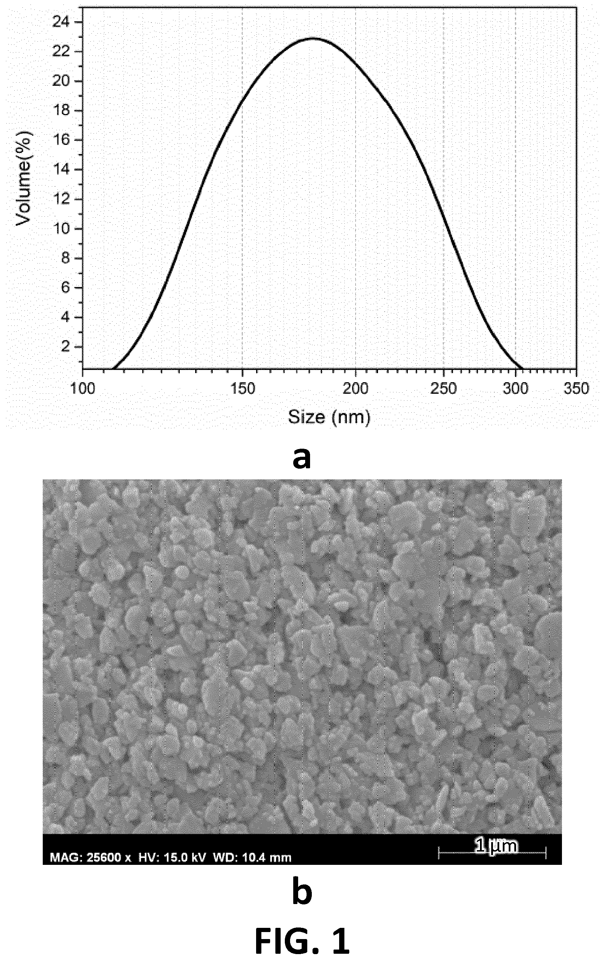

We now refer to Fig. 1. The average size of the particles (herein also referred to as 'primary particles') after milling was below 200 nm, as measured by a Malvern Mastersizer 2000 particle size analyzer (see Fig. 1a) and confirmed by scanning electron microscopy (SEM) (see Fig. 1b).

The ball-milled suspension of Si was then mixed with a carbon nanotube (CNT) suspension and a polyvinylpyrrolidone (PVP) solution to prepare a Si/C composition for spray drying. To this end, a stable suspension of CNT (average diameter of 9.5 nm and average length of 1.5 µm) in isopropanol (0.2 wt%) was first prepared by a hydrothermal route and was added to the Si suspension to obtain a Si:CNT ratio of 1:0.01. Subsequently, a solution of 40% PVP with a molar mass of 40000 g/mol was prepared by heating PVP to 40 °C in isopropanol under stirring for 2 hours. The PVP solution was added to the Si suspension to obtain a Si:PVP ratio of 1:1.

The suspension was then spray-dried in fountain mode in a Mobile Minor GEA-Niro spray dryer to form silicon-carbon (Si/C) composite particles (herein also referred to as 'secondary particles'). The suspension was pumped with an injection rate of 25 ml/min to the two-fluid nozzle configuration and into the drying chamber of the spray dryer. The inlet temperature for the drying air and the air pressure that was used to pulverize the suspension were 120°C and 0.5 bar, respectively. Once the suspension was injected into the drying chamber, it formed droplets that got into contact with the hot air in the drying chamber. This resulted in evaporation of the solvent and the formation of homogeneous secondary particle powder, which flowed with the air current to the cyclone for recovery of the powder. The outlet temperature was 83±2°C.

In general, the spray drying step allows achieving a high to excellent homogeneity of the secondary particle. The inlet temperature, air pressure and the injection rate can therefore be tuned so as to obtain a controlled morphology and a desired size of the secondary particles.

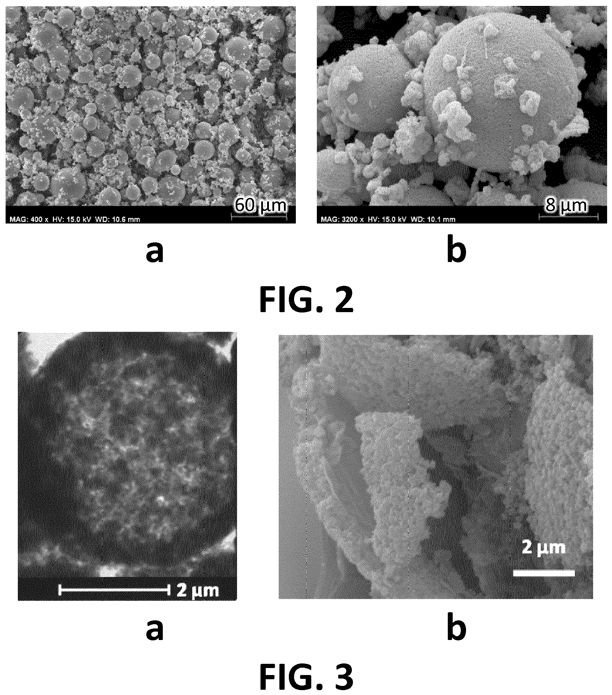

We now refer to Fig. 2a. The resulting secondary particles had a spherical morphology with a size distribution of 1-50 µm, as confirmed by SEM. As seen in Fig. 2a, the morphological properties of the powder before heat treatment (cf. infra) were such that the PVP was forming a relatively smooth outer surface on the secondary particles.

The Si/C composite particles were then subjected to a heat treatment process in a reductive atmosphere (e.g. Ar/5% H₂) for 12 h at 1100 °C. This allowed to reduce an eventual silicon oxide layer on the secondary particles and also to transform the organic carbon sources (e.g. PVP) in the secondary particles to conductive carbon.

We now refer to Fig. 2b. After transformation of PVP during the heat treatment, the secondary particles had primary Si particles on the outer surface of the spheres.

We now refer to Fig. 3. Transmission electron microscopy (TEM) revealed that the spherical secondary particles are in fact hollow (see Fig. 3a). The formation of these hollow particles was tentatively attributed to the fast drying process by using a solvent in the spray-drying method, which created a crust on the droplet during the drying process; as opposed to slowly increasing the concentration of Si primary particles upon evaporation of the solvent and thus decreasing the particle size of the droplet. The thickness of this crust was between 750 nm and 1 µm, as was observed from a collapsed secondary particle (see Fig. 3b). An advantage of this morphology is that the primary Si particles are at the same time well mixed with the carbon in the outer layer of the sphere, while having a quite porous structure (where the solvent evaporation took place and vapors were moving out from inside the droplet). As such, this type of hollow sphere structure can better handle the volume expansion issues as compared to dense aggregates of Si, while also minimizing the diffusion path for Li.

The carbon content in the secondary particles was also measured by an Analytik Jena Multi EA 4000 elemental analyzer, respectively yielding 20 wt% and 5 wt% carbon before and after heat treatment. The final Si content in the heat-treated secondary particles was thus 95 wt%.

### Example 1c: Preparation of a layer of Si/C composite material

The Si/C composite particles (i.e. the secondary particles) were further mixed with carbon black (CB) (Alfa Aesar, Carbon black, acetylene, 100% compressed, 99.9+%) as a conductive carbon and carboxymethylcellulose (CMC) (Sigma Aldrich) as a binder in an aqueous buffer solution of KOH and citric acid at pH 3 in order to obtain a slurry. The Si/C:CB:CMC weight ratio was 1:1:1.

This slurry was then cast to a thickness of 120 µm with film coater on a copper foil to prepare a layer of the Si/C composite. This Si/C composite layer was dried at room temperature overnight and then at 80 °C under vacuum for 12 hours. The dried Si/C composite layer had a thickness between 2 and 50 µm, which was mainly dependent on the size of the secondary particles.

### Example 1d: Preparation of a composite anode material

Once the layer of Si/C composite material was completely dried, a graphene oxide (GO) suspension (Graphenea, Spain) in water (0.4 wt %) was cast on top of the film, followed by drying. The dried suspension could form stacks of GO layers with a thickness of up to 1 µm. The targeted composite anode material was thereby obtained.

### Example 1e: Assembly of a battery based on the composite anode material

The dried composite anode material was then cut into 15 mm disks and assembled in a coin cell in an argon-filled glove box. Here, one half-cell was formed by the composite anode material electrode, metallic lithium was used as the counter and reference electrode and the electrolyte was LiPF₆ in ethylene carbonate (EC) and dimethyl carbonate (DMC) together with 10 wt% fluoroethylene carbonate (FEC) and 2 wt% vinylene carbonate (VC) as additives to stabilize the solid (i.e. electrode)/electrolyte interphase (SEI).

### Example 2: Electrochemical performance of the composite anode material of example 1

### Example 2a: Electrochemical performance of the composite anode material of example 1 at full capacity

The electrochemical performance of the composite anode material was studied by galvanostatic cycling within a voltage range of 0.01 to 1 V of coin cells according to example 1e. The applied current density (C-rate) was here calculated on the basis of the theoretical capacity for 3 Li participating in the conversion reaction (i.e. 3600 mAh/g). The cells were first stabilized kinetically by galvanostatic charge-discharge with a low current of C/20.

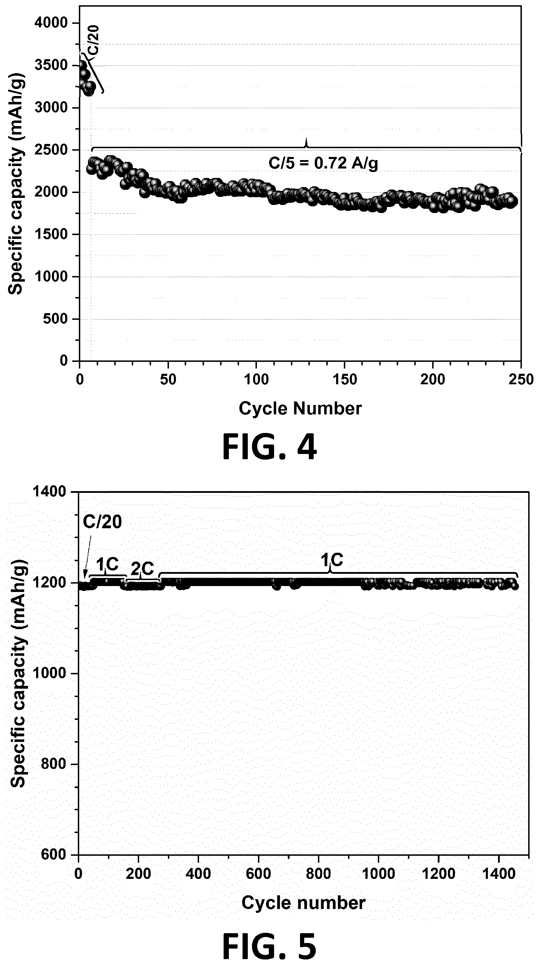

We now refer to Fig. 4, illustrating the electrochemical performance of the composite anode material of example 1. We observe that the capacity at C/5 reached 3600 mAh/g in the first couple of cycles and reached 3300 mAh/g after 5 cycles. Subsequently, a current density of C/5 (0.72 A/g) was applied to the cell, resulting in an initial specific capacity of 2300 mAh/g. We observed a high reversible capacity (1900 mAh/g) for this composite electrode with the major capacity fade happening in the first 50 cycles. This capacity drop was tentatively attributed mainly to the solid-electrolyte interphase (SEI) formation, which occurs by consuming some of the lithium. Once the SEI layer was more or less stabilized (e.g. from the 50^{th} cycle, with a capacity of 2000 mAh/g), the capacity retention for 200 cycles was calculated to correspond to 95% (taking into account the temperature fluctuations during measurements, which affect the capacity values).

### Example 2b: Comparison with the prior art

By comparing the obtained capacity and retention values with the ones in WO2016106487, we see that even though the current density applied to the battery in WO2016106487 (0.3 A/g = C/12) is lower than in the present example, the reported reversible capacity (ca. 1800 mAh/g after 110 cycles) and capacity retention (78.3% after 110 cycles) are inferior. In this respect, it is worth noting that, generally, a lower current density allows the electrochemical reaction to take place at a slower speed, thus having more chance to reach the initial capacity of the battery (e.g. if the reaction is somehow limited by kinetics).

### Example 2c: Electrochemical performance of the composite anode material of example 1 at limited capacity

One important aspect regarding the use of Si in practical lithium-ion batteries is that Si is playing the role of an anode. The capacity of a full cell therefore also depends on the capacity of the cathode material (i.e. the source of lithium). Consequently, based on the cathode material limitations at present, the theoretical capacity of Si does not need to be reached. We therefore limited the number of Li⁺ that will react with Si during cycling, so as to decrease the volume expansion in the formed alloy while maintaining a high capacity of Si in the battery. By limiting the number of reacted lithium to one, a theoretical capacity for Si of 1200 mAh/g is obtained. This limitation was applied in the current density and the overall time spent for the charge and the discharge of the battery.

We now refer to Fig. 5, illustrating the electrochemical performance of the composite anode material of example 1, where the Li-Si half-cell was respectively cycled at C/20, 1C, 2C, followed by a long cycling at 1C. We observe that the initial capacity at C/20 was 1198 mAh/g, which corresponds to 99.83% of the theoretical capacity. Furthermore, the electrode showed very good performance even at fast charge/discharge cycling rates (1C and 2C). In order to verify the reliability of the battery after cycling at 2C, the battery was tested for a long period of time at 1C: no capacity loss was observed even after more than 1000 cycles.

### Example 2d: Influence of the graphene oxide layer

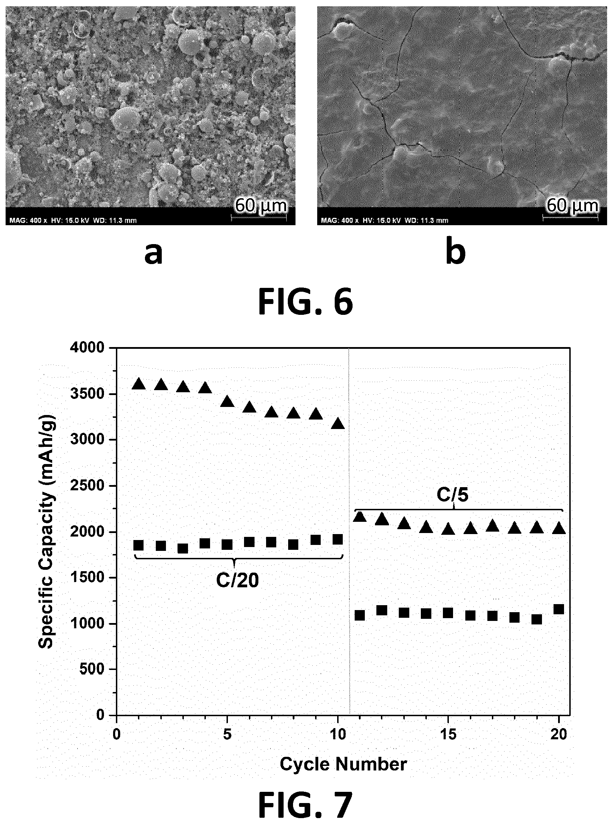

We now refer to Fig. 6. Two samples were prepared as explained in example 1, except that the casting of the GO layer was omitted for one of these. The morphology of the sample without GO layer is shown in Fig. 6a, whereas the sample with GO layer is shown in Fig. 6b.

We now refer to Fig. 7, illustrating the electrochemical performance of the composite anode material with (triangles) and without (squares) GO layer. A huge difference between both is observed, in that the capacity values were nearly doubled by the addition of the GO layer. Furthermore, the theoretical capacity was not obtained with the sample without GO, even in the first cycle under the low current density of C/20. This suggests that 3 Li⁺ ions cannot participate in the reaction to form the LiₓSi alloy (where x = number of Li). This was tentatively attributed to the protective role of the GO layer, by creating an SEI layer by itself, and by limiting the main degradation of Li at the Si sites. Additionally, coverage of the Si/C composite secondary particles by GO helps to improve the physical and electrical connection between these active material particles.

### Example 2e: Influence of drying method

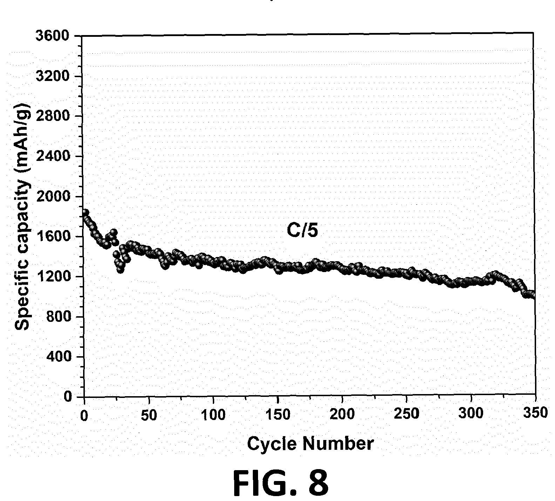

We now refer to Fig. 8. For comparison, a sample was prepared as explained in example 1 but using rotary evaporation instead of spray-drying; the electrochemical performance of which is shown in Fig. 8. The initial capacity and capacity retention over 350 cycles at C/5 were evidently less good than those based on the homogeneously mixed Si/C composite particles prepared by spray-drying. The spray-drying method is therefore typically preferred. It was observed that the particles prepared in the rotary evaporator tend to form aggregates, which could limit the Li diffusion.

### Example 3: Further composite anode materials and batteries based thereon

### Example 3a

Example 1 was repeated, but undoped Si wafer fragments were used as a Si source, rather than photovoltaic cells. In this case, there was typically no need to first leach metals out of the fragments. Thus, only the pre-grinding had to be performed to obtain Si powder with a particle size under 125 µm.

### Example 3b

Example 1 was repeated, but a commercial Si nano-powder was used as a Si source. In this case, a leaching step or pre-grinding step was typically not needed. Furthermore, the ball-milling step was only used to mix the PVP and CNT additives, thereby obtaining the suspension for spray drying.

### Example 3c

Example 1 was repeated, but only the CNT (i.e. a conductive carbon) suspension was added to the Si primary particles for forming the suspension for spray drying.

### Example 3d

Example 1 was repeated, but only the PVP (i.e. an organic compound) solution was added to the Si primary particles for forming the suspension for spray drying.

### Example 3e: Performance of the composite anode materials of examples 3a-d

The different components used in examples 1 and 3a-d, as well as the electrochemical results obtained for these composite anode materials, are summarized in the table below.

| | Source of Si | Organic compound | Conductive carbon | Limited capacity measurement (1200 mAh/g) | | Full capacity measurement (3600 mAh/g) | |
|---|---|---|---|---|---|---|---|
| | | | | Initial capacity | Capacity retention | Initial capacity | Capacity retention |
| Example 1 | Recycled from PV panels | PVP | CNT | 1198 mAh/g @ C/20 | 100% after 25 cycles | 3600 mAh/g @ C/20 | 92% for first 5 cycles |
| | | | | 1198 mAh/g @ C/5 | 100% after 25 cycles | | |
| | | | | 1200 mAh/g @1C | 100% after 50 cycles | 2300 mAh/g @ C/5 | About 95% after 200 cycles |
| | | | | 1200 mAh/g @2C | 100% after 50 cycles | | |
| Example 3a | Undoped Si wafer | PVP | CNT | | | | |
| Example 3b | Si nano-powder | PVP | CNT | | | | |
| Example 3c | Recycled from PV panels | / | CNT | 1198 mAh/g @ C/20 | 100% after 25 cycles | 3300 mAh/g @ C/20 | Stable for 8 cycles 40% after the 8th cycle |
| | | | | 1200 mAh/g @ C/5 | 100% after 25 cycles | | |
| | | | | 1000 mAh/g @ 1C | 100% after 50 cycles | | |
| | | | | 850 mAh/g @ 2C | 96 % after 50 cycles | | |
| Example 3d | Recycled from PV panels | PVP | / | 1200 mAh/g @ C/20 | 100% after 25 cycles | | |
| | | | | 1200 mAh/g @ C/5 | 100% after 25 cycles | | |
| | | | | 1000 mAh/g @ 1C | 100% after 50 cycles | | |
| | | | | 800 mAh/g @ 2C | 88 % after 50 cycles | | |

It is to be understood that although preferred embodiments, specific constructions and configurations, as well as materials, have been discussed herein for devices according to the present invention, various changes or modifications in form and detail may be made without departing from the scope and technical teachings of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A composite anode material, comprising:
i. a layer of silicon-carbon composite material, and
ii. a graphene oxide layer covering the layer of silicon-carbon composite material.

2. The composite anode material according to claim 1, wherein the layer of silicon-carbon composite material comprises:
ia. a matrix of:
- a conductive carbon material, and
- a binder, and
ib. silicon-carbon composite particles dispersed in said matrix.

3. The composite anode material according to any of the previous claims, wherein the silicon-carbon composite particles each comprise a plurality of silicon particles intermixed with a carbon-based material.

4. The composite anode material according to claim 3, wherein the carbon-based material is a conductive carbon material.

5. The composite anode material according to claim 3 or 4, wherein the silicon-carbon composite particles comprise a porous shell surrounding a hollow, the porous shell comprising the plurality of silicon particles intermixed with a carbon-based material.

6. A method for forming a composite anode material as defined in any of claims 1 to 5, comprising:
a. providing a layer of silicon-carbon composite material, and
b. providing a graphene oxide layer over the layer of silicon-carbon composite material.

7. The method according to claim 6, wherein providing the layer of silicon-carbon composite material in step a comprises:
a1. providing a slurry of the silicon-carbon composite material on a conductive substrate, and
a2. drying the slurry to form the layer of silicon-carbon composite material.

8. The method according to claim 7, wherein providing the slurry of silicon-carbon composite material on the conductive substrate in step a1 comprises:
- mixing the silicon-carbon composite material with a conductive carbon material and a binder to form the slurry, and
- coating the slurry on the conductive substrate using a wet coating technique.

9. The method according to any of claims 6 to 8, wherein providing the graphene oxide layer in step b comprises:
b1. providing an aqueous suspension of graphene oxide on the layer of silicon-carbon composite material, and
b2. drying the aqueous suspension to form the graphene oxide layer.

10. The method according to any of claims 6 to 9, comprising a step a', before step a, of forming the silicon-carbon composite material, comprising:
a'1.providing a suspension of silicon particles, the silicon particles having an average size of 200 nm or lower,
a'2.mixing a carbon-based material into the suspension of silicon particles,
a'3.spray drying the suspension of silicon particles and carbon-based material to form particles of silicon-carbon composite material, and
a'4.baking the particles of silicon-carbon composite material in a reductive atmosphere.

11. The method according to claim 10, wherein step a'1 and/or step a'2 comprise a ball milling.

12. The method according to claim 10 or 11, wherein the silicon particles are obtained from photovoltaic cells and/or wafer fragments.

13. A battery, comprising a composite anode material as defined in any of claims 1 to 5.

14. The battery according to claim 13, being a lithium-ion battery.

15. Use of a graphene oxide layer for inhibiting or buffering a volume expansion of a layer of silicon-carbon composite material as defined in any of claims 1 to 5.
